# EUROPÄISCHE PATENTSCHRIFT

(11) **EP 0 856 792 B1**
(45) Veröffentlichungstag und Bekanntmachung des Hinweises auf die Patenterteilung: **05.02.2003**
(21) Anmeldenummer: 97440143.2
(22) Anmeldetag: 29.12.1997
(51) Int. Cl.: G06F 11/16, B61L 25/08

(54) **Verfahren zur sicheren Darstellung eines Bildes auf einem Monitor**
Method for the safe display of an image on a monitor
Méthode pour l'affichage sûr d'un image sur un ecran

(30) Priorität: 31.01.1997 DE 19703574
(43) Veröffentlichungstag der Anmeldung: 05.08.1998
(73) Patentinhaber: ALCATEL, 75008 Paris (FR)
(72) Erfinder: Richter, Andreas, 71229 Leonberg (DE); Steiner, Manfred, 70180 Stuttgart (DE); Blechinger, Hans-Jürgen, 71691 Freiberg a.N. (DE); Monus-Garcia, Jaime, 73033 Göppingen (DE)
(74) Vertreter: Schätzle, Albin, Dipl.-Phys.

(56) Entgegenhaltungen:
- EP-A- 0 443 377
- EP-A- 0 645 711
- US-A- 5 508 721

## Beschreibung

Die Erfindung betrifft ein Verfahren zur sicheren Darstellung eines Bildes, insbesondere eines Gleisbildes, auf einem Monitor.

In vielen Bereichen der Technik wird der Zustand eines Prozesses oder einer Anlage durch mehrere physikalische Größen erfaßt. Eine Datenverarbeitungsanlage verknüpft diese physikalischen Größen miteinander und erzeugt daraus ein logisches Abbild dieses Zustandes. Anschließend wird das logische Abbild in einem Bildaufbereitungsrechner zu einem visuell erfaßbaren Bild aufbereitet und auf einem Monitor dargestellt. Eine Bedienperson, die auf dieser Darstellung basierende Entscheidungen fällen soll, muß davon ausgehen können, daß das auf dem Monitor sichtbare Bild tatsächlich der realen Situation entspricht und nicht etwa durch Hardwarefehler im Bildaufbereitungsrechner verfälscht wird. Es sind daher Maßnahmen erforderlich, die die sichere Darstellung von Bildern auf einem Monitor gewährleisten.

Aus der EP-B1-0 392 328 ist ein "Verfahren zur ständigen Prüfung einer signaltechnisch sicheren Bildschirmdarstellung bekannt. Zwei Bildansteuerrechner empfangen unabhängig voneinander über einen eigenen Kanal von einer im signaltechnischen Sinne sicheren Datenverarbeitungsanlage Informationen. Die aus den Informationen berechneten Bilder werden jeweils an einen Bildwiederholspeicher weitergegeben. Ein Monitor kann wechselweise auf einen der beiden Bildwiederholspeicher aufgeschaltet werden. Die Sicherheit der Darstellung wird dadurch gewährleistet, daß auf der Aufforderung sicheren Datenverarbeitungsanlage die in den Bildwiederholspeichern abgelegten Bilder zurückgelesen und miteinander verglichen werden. Bei diesem Vergleich berechnen die beiden Bildansteuerrechner unabhängig voneinander mit Hilfe eines vorgegebenen Redundanzpolynoms eine Prüfredundanz. Die sichere Datenverarbeitungsanlage überprüft anschließend die Prüfredundanzen auf Übereinstimmung.

Ein ähnliches Verfahren ist auch aus der DE-C2-43 06 470 bekannt. Auch hier werden zwei unabhängigen Rechnern Informationen zugeführt. Die Rechner erstellen aus diesen Informationen Bilder, die insbesondere dann, wenn eine Bedienhandlung vorgenommen wird, miteinander verglichen werden.

Nachteilig bei den beschriebenen Verfahren ist, daß diese Lösungen einen verhältnismäßig hohen Hardwareaufwand erfordern. Es ist daher Aufgabe der Erfindung, ein Verfahren anzugeben, welches bei geringem Hardwareaufwand eine sichere Darstellung von Bildern auf einem Monitor erlaubt.

Die Erfindung löst diese Aufgabe mit Hilfe der in Anspruch 1 angegebenen Merkmale. Einem Bildaufbereitungsrechner BAR werden Informationen i zugeführt, aus denen der Bildaufbereitungsrechner BAR in einem ersten internen logischen Kanal ILK1 ein erstes Bild B1 erzeugt. Das erste Bild B1 wird in einem ersten Bildspeicher BS1 abgelegt und unter Verwendung eines Bildwiederholspeichers BWS auf dem Monitor M angezeigt. In einem zweiten internen logischen Kanal ILK2 erzeugt der Bildaufbereitungsrechner BAR aus den Informationen i ein zweites Bild B2 und legt dieses in einem zweiten Bildspeicher BS2 ab. Die Prüfung der Sicherheit der Darstellung erfolgt dadurch, daß der Inhalt des Bildwiederholspeichers BWS mit dem Inhalt des ersten Bildspeichers BS1 und unabhängig davon mit dem Inhalt des zweiten Bildspeichers BS2 verglichen wird.

Im Gegensatz zu bekannten Lösungen erfordert das erfindungsgemäße Verfahren lediglich einen einzigen Bildaufbereitungsrechner BAR. Ferner wird - pro angeschlossenen Monitor - nur ein Bildwiederholspeicher BWS benötigt. Dadurch kann die erforderliche Hardware mit handelsüblichen Komponenten in einem einzigen Gehäuse aufgebaut werden und ist somit auch besonders für den mobilen Einsatz geeignet. Außerdem entfällt der bei bekannten Lösungen erforderliche Aufwand für den Aufbau eines synchronisierten Datenübertragungsweges zwischen zwei Rechnern.

In einem besonders vorteilhaften Ausführungsbeispiel wird die Sicherheit der Darstellung dadurch weiter erhöht, daß in einem der beiden internen logischen Kanäle ILK1 oder ILK2 zu bestimmten Zeitpunkten gezielt wenigstes ein Bildpunkt verändert wird. Bei einem Vergleich der in den beiden internen logischen Kanälen erzeugten Bilder muß sich bei vollständiger Trennung der beiden logischen Kanäle und fehlerfreien Hardwarekomponenten ergeben, daß keine Übereinstimmung der Bilder vorliegt. Sollte beim Vergleich der Bilder eine Übereinstimmung festgestellt werden, so liegt ein Fehler vor, der der Bedienperson mitgeteilt wird.

Der Vergleich der Bildspeicher kann zu vorher festgelegten Zeitpunkten (z. B. "alle 10 Minuten") und/oder immer dann stattfinden, wenn eine Bedienhandlung vorgenommen wird. Letzteres ist insbesondere dann sinnvoll, wenn die Bedienhandlung weitreichende Folgen für die Sicherheit des überwachten Zustandes hat. Ein Beispiel dafür wären Bedienhandlungen, die von einem Fahrdienstleiter in einem elektronischen (Block-)Stellwerk eine kontrollpflichtige Freigabe verlangen.

Die Erfindung wird nachfolgend anhand der Ausführungsbeispiele und der Zeichnungen eingehend erläutert. Es zeigen:
- Fig. 1:: Eine schematische Darstellung zur Erläuterung des erfindungsgemäßen Verfahrens nach Anspruch 1,
- Fig. 2:: Eine schematische Darstellung zur Erläuterung des erfindungsgemäßen Verfahrens nach Anspruch 3,
- Fig. 3:: Eine schematische Darstellung zur Erläuterung des erfindungsgemäßen Verfahrens nach Anspruch 6.

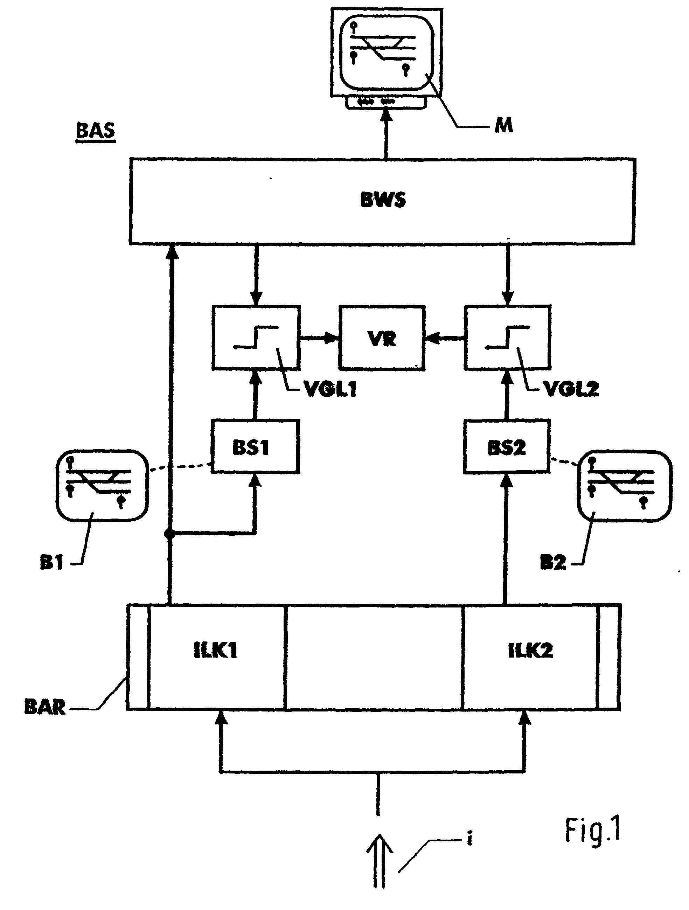

Fig. 1 zeigt eine schematische Darstellung, anhand derer das erfindungsgemäße Verfahren im folgenden erläutert wird. Ein Bildaufbereitungssystem BAS umfaßt als zentrale Komponente einen Bildaufbereitungsrechner BAR, der im wesentlichen aus einem Prozessor und einem Hauptspeicher besteht. Aufgrund einer speziellen Programmierung, auf die unten näher eingegangen wird, sind im Bildaufbereitungsrechner BAR ein erster interner logischer Kanal ILK1 und ein zweiter interner logischer Kanal ILK2 emuliert. Der Begriff "logisch" soll in diesem Zusammenhang zum einen darauf hinweisen, daß unterschiedliche Gruppen von Informationen zwar im gemeinsamen Hauptspeicher, dort jedoch in voneinander getrennten Adressbereichen gespeichert werden. Zum anderen werden die Gruppen von Informationen im Prozessor nur nacheinander, d. h. ohne miteinander in Beziehung gesetzt zu werden, verarbeitet.

Im dargestellten Ausführungsbeispiel werden jedem der beiden internen logischen Kanäle ILK1 und ILK2 die gleichen Informationen i von einer externen Quelle zugeführt. Bei dieser Quelle wird es sich in der Regel um eine Datenverarbeitungsanlage handeln, weswegen diese Quelle im folgenden als informationszuführende Datenverarbeitungsanlage bezeichnet wird.

Im ersten internen logischen Kanal ILK1 wird aus den zugeführten Informationen i ein erstes Bild B1 berechnet, und zwar gemäß den Anweisungen eines den ersten internen logischen Kanäle emulierenden ersten Datenverarbeitungsprogramms. Unabhängig davon wird im zweiten internen logischen Kanal ILK2 aus den zugeführten Informationen i ein zweites Bild B2 berechnet, und zwar gemäß den Anweisungen eines den zweiten internen logischen Kanal emulierenden zweiten Datenverarbeitungsprogramms. Das zweite Datenverarbeitungsprogramm kann mit dem ersten Datenverarbeitungsprogramm syntaktisch und semantisch übereinstimmen. Beide Bilder werden separat in Bildspeichern BS1 und BS2 abgelegt. Zusätzlich wird das im internen logischen Kanal ILK1 erzeugte Bild B1 an einen Bildwiederholspeicher BWS weitergegeben, der mit einem Monitor M verbunden ist. Der Monitor M zeigt somit das Bild B1 an. Der Monitor M sei hier stellvertretend für jede Art von Vorrichtung genannt, mit der Informationen visuell erfaßbar dargestellt werden können. Wenn beide internen logischen Kanäle ILK1 und ILK2 - insbesondere die ihnen zugeordneten Hauptspeicherbereiche - fehlerfrei arbeiten, so müssen die Bilder B1 und B2 übereinstimmen, und zwar Bildpunkt für Bildpunkt. Wenn überdies der Bildwiederholspeicher BWS fehlerfrei arbeitet, dann muß auch das auf dem Monitor M dargestellte Bild sowohl mit dem im Bildspeicher BS1 als auch mit dem im Bildspeicher BS2 abgelegten Bild übereinstimmen.

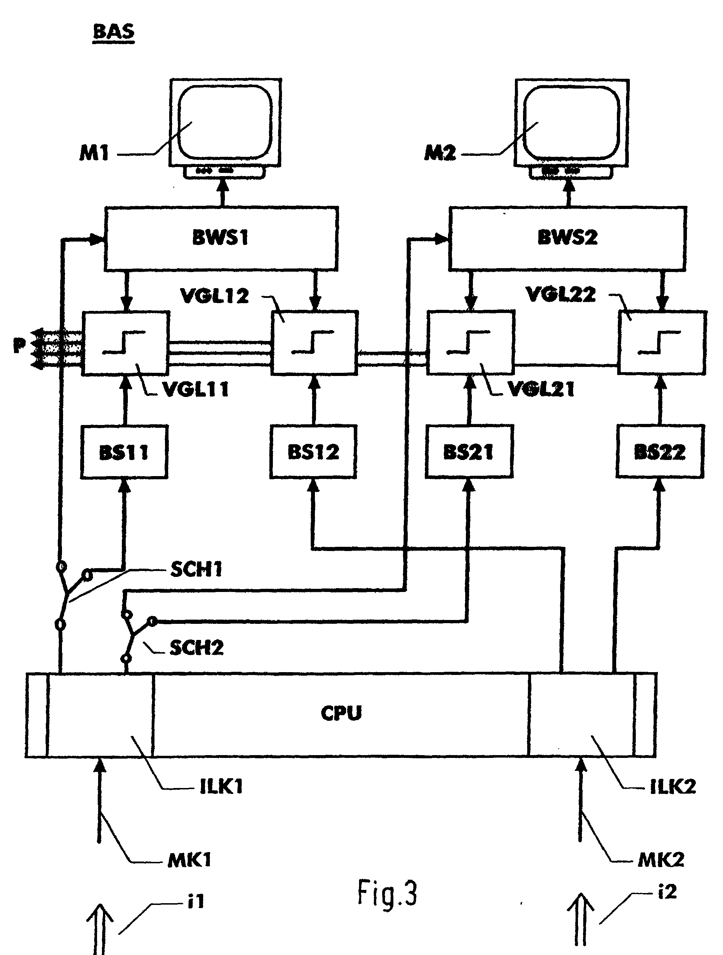

Um diese Übereinstimmungen zu überprüfen, wird zu bestimmten Zeitpunkten der Inhalt des Bildwiederholspeichers BWS ausgelesen und mit dem Inhalt der Bildspeicher BS1 und BS2 jeweils unabhängig voneinander in Vergleicherstufen VGL1 und VGL2 verglichen ("Übereinstimmungsprüfung"). Die Vergleicherstufen VGL1 und VGL2 geben das Ergebnis der von ihnen durchgeführten Vergleiche an einen Rechner weiter. Bei diesem Rechner handelt es sich vorzugsweise um die informationszuführende Datenverarbeitungsanlage. Ebenso besteht die Möglichkeit, diese Aufgabe vom Bildaufbereitungsrechner BAR oder, wie in Fig. 1 dargestellt, von einem externen Vergleichsrechner VR übernehmen zu lassen. Dieser Vergleichsrechner VR kann sich, wie in Fig. 3 angedeutet, auch außerhalb des Bildaufbereitungssystems BAS befinden. Wird diesem Rechner mitgeteilt, daß der Inhalt des Bildwiederholspeichers BWS nicht mit dem Inhalt des ersten oder des zweiten oder sogar beider Bildspeichers BS1 bzw. BS2 übereinstimmt, so veranlaßt der Rechner VR beispielsweise eine Fehlermeldung oder er unterbindet weitere Benutzereingaben.

Die Übereinstimmungsprüfung wird zur Verbesserung der Sicherheit vorzugsweise so durchgeführt, daß sämtliche Bildpunkte der ausgelesenen Bilder miteinander verglichen werden. Da das erfindungsgemäße Verfahren nur einen Bildaufbereitungsrechner BAR hat und eine Synchronisierung mit einem zweiten Rechner entfällt, läßt sich dieser Vergleich - im Gegensatz zu bekannten Lösungen - trotz der großen Datenmengen in kurzer Zeit durchführen. Ebenso jedoch können nur zufällig oder systematisch ausgewählte Bildpunkte miteinander verglichen werden.

In einem anderen Ausführungsbeispiel der Erfindung werden in den internen logischen Kanälen ILK1 und ILK2 des Bildaufbereitungsrechners BAR bei Eingang einer neuen Information i die Bilder nicht vollständig neu aufgebaut, sondern nur solche Bereiche des Bildes neu berechnet, die von der zugeführten Information i betroffen sind. Handelt es sich beispielsweise bei den dargestellten Bildern um Gleisbilder, wie in Fig. 1 dargestellt, und die Information i hat den Inhalt "Signal xy von Fahrt auf Halt stellen", dann bereitet der Bildaufbereitungsrechner BAR nur den Bildausschnitt auf, der das Signal xy zeigt. Im neu ermittelten Bildausschnitt zeigt das graphisch dargestellte Signal dann nicht mehr grün, sondern rot. Nur dieser veränderte Bildausschnitt wird an die Bildspeicher BS1 und BS2 sowie an den Bildwiederholspeicher weitergegeben; die übrigen dort gespeicherten Bildpunkte bleiben unverändert.

Bei einem besonders vorteilhaften Ausführungsbeispiel der Erfindung nach Anspruch 3 wird die Unabhängigkeit der beiden internen logischen Kanäle durch eine zusätzliche Überprüfung verifiziert. Bei dieser Überprüfung wird zunächst in einem der beiden internen logischen Kanäle ILK1 oder ILK2 wenigstens ein Bildpunkt gezielt verändert. Dies führt dazu, daß die Bilder B1 und B2 sich in diesem wenigstens einem Bildpunkt unterscheiden. Nun wird in der oben geschilderten Weise eine Übereinstimmungsprüfung durchgeführt. Falls die beiden internen logischen Kanäle ILK1 und ILK2 voneinander unabhängig sind und die Bildspeicher BS1 und BS2 sowie der Bildwiederholspeicher BWS fehlerfrei arbeiten, so muß sich bei dieser Übereinstimmungsprüfung ergeben, daß der Inhalt des Bildwiederholspeichers BWS mit dem Inhalt eines der beiden Bildspeicher BS1 oder BS2 *nicht* übereinstimmt. Nur wenn der Vergleichsrechner VR eine solche mangelnde Übereinstimmung feststellt, ist die Unabhängigkeit der internen logischen Kanäle ILK1 und ILK2 verifiziert. Anderenfalls veranlaßt der Vergleichsrechner VR ein Fehlermeldung. Da hier bei Fehlerfreiheit ein Nichtübereinstimmung festgestellt werden soll, wird dieser Test im folgenden "Nichtübereinstimmungsprüfung" genannt.

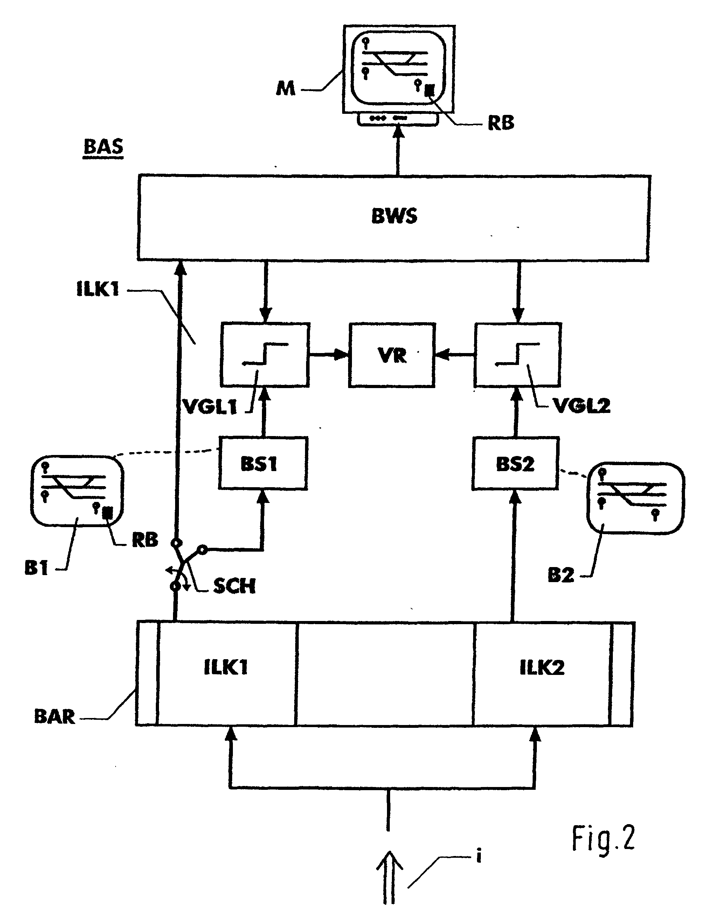

Verschiedene Varianten der Nichtübereinstimmungsprüfung werden nachfolgend anhand der Fig. 2 erläutert. Im internen logischen Kanal ist bei diesem Ausführungsbeispiel ein Schalter SCH vorgesehen, mit dessen Hilfe Bilder oder Bereiche davon gezielt vom Bildaufbereitungsrechner BAR an den Bildwiederholspeicher BWS, an den Bildspeicher BS1 oder - wie in Fig. 2 eingezeichnet - an beide Speicher parallel weitergegeben werden können. Im ersten internen logischen Kanal IKL1 wird nun eine Veränderung eines Bildbereichs vorgenommen. Im dargestellten Beispiel besteht diese Änderung darin, daß die Farbe in einem rechteckigen Bereich RB auf schwarz umgestellt wird. Bei der eingezeichneten Stellung des Schalters SCH wird dieser veränderte Bildbereich sowohl an den Bildspeicher BS1 als auch an den Bildwiederholspeicher BWS weitergegeben. Das im Bildspeicher BS1 abgelegte Bild enthält demnach das schwarze Rechteck RB, und auch auf dem Monitor M erscheint an der gleichen Stelle das Rechteck RB. Nun wird eine Übereinstimmungsprüfung durchgeführt, d. h. der Inhalt des Bildwiederholspeichers wird ausgelesen und unabhängig voneinander mit dem Inhalt der Bildspeicher BS1 und BS2 verglichen. Bei Unabhängigkeit der internen logischen Kanäle muß die Prüfung nun ergeben, daß das Bild im Bildwiederholspeicher BWS zwar mit dem im ersten Bildspeicher BS1, nicht jedoch mit dem im zweiten Bildspeicher BS2 abgelegten Bild übereinstimmt.

Bei einer zweiten Variante wird der veränderte Bildbereich mit Hilfe des Schalters SCH nur an den Bildwiederholspeicher BWS weitergegeben. Bei einer Übereinstimmungsprüfung dürfen dann weder die Vergleicherstufe VGL1 noch die Vergleicherstufe VGL2 eine Übereinstimmung feststellen.

Bei einer dritten Variante wird der im ersten internen logischen Kanal ILK1 erzeugte veränderte Bildbereich über den Schalter SCH lediglich an den Bildspeicher BS1 weitergegeben. In diesem Fall muß eine anschließend durchgeführte Übereinstimmungsprüfung ergeben, daß nur das im Bildwiederholspeicher BWS und das im zweiten Bildspeicher BS2 abgelegte Bild miteinander übereinstimmen.

Bei einer vierten Variante wird nicht im ersten, sondern im zweiten internen logischen Kanal ein Bild oder ein Bereich davon verändert. Eine Übereinstimmungsprüfung muß dann als Ergebnis liefern, daß nur zwischen dem Inhalt des Bildwiederholspeicher BWS und dem des Bildspeichers BS1 eine Übereinstimmung besteht. Die beiden zuletzt genannten Varianten haben den Vorteil, daß das auf dem Monitor M dargestellte Bild durch die Nichtübereinstimmungsprüfung nicht beeinflußt wird, wodurch die Nichtübereinstimmungsprüfung für die den Monitor betrachtende Bedienperson verborgen bleibt.

Vorzugsweise betrifft die bei der Nichtübereinstimmungsprüfung vorzunehmende Veränderung lediglich einen einzigen Bildpunkt. Der Farbwert des Bildpunktes wird dabei entweder zufällig oder nach bestimmten Regeln verändert. Besonders vorteilhaft ist es, wenn bei dem nachfolgenden Vergleich des Inhalts des Bildwiederholspeichers BWS mit dem Inhalt des Bildspeichers BS1 bzw. BS2 sämtliche Punkte eines Bildes miteinander verglichen werden. Wenn dann die Position des veränderten Bildpunktes bekannt ist, so können "echte", d. h. durch Hardwarefehler aufgetretene Bildpunktveränderungen, von absichtlich erzeugten Bildpunktveränderungen unterschieden werden. Eine Gefahr, daß echte Fehler wegen der zusätzlich erzeugten künstlichen Fehler nicht erkannt werden, besteht daher nicht.

Die gezielte Verfälschung des oder der Bildpunkte im Rahmen der Nichtübereinstimmungsprüfung kann auf verschiedene Weisen geschehen. Bei der Aufbereitung des Bildes durch den Bildaufbereitungsrechner BAR wird in jedem der internen logischen Kanäle ILK1 und ILK2 aus den zugeführten Informationen i ein Bild aufgebaut. Die Bildaufbereitung vollzieht sich dabei in mehreren Prozeßschritten. Die Anweisung, einen oder mehrere Bildpunkte gezielt zu verändern, ist am einfachsten im letzten Prozeßschritt umzusetzen, da erst dort die endgültige Zuweisung der Farbwerte zu den einzelnen Bildpunkten erfolgt. Ebenso kann jedoch eine derartige Änderungsanweisung bereits in einen der vorausgehenden Schritte eingreifen. Die Änderungsanweisung könnte dann etwa eine Form haben, wie sie die zugeführten Informationen i nach einer Dekodierung haben.

Sowohl die Übereinstimmungs- als auch die Nichtübereinstimmungsprüfung kann zu festgelegten Zeitabständen durchgeführt oder von einer Bedienperson extern veranlaßt werden. Letzteres kann beispielsweise dadurch geschehen, daß die Bedienperson einen expliziten Befehl dazu gibt. Ebenso können die Prüfungen ausgelöst werden, sobald die Bedienperson beliebige oder bestimmte Bedienhandlungen vornimmt.

Das erfindungsgemäße Verfahren zur sicheren Darstellung eines Bildes auf eine Monitor wird vorzugsweise von einem - eventuell in mehrere Teilprogramme aufgeteiltes - Datenverarbeitungsprogramm auf handelsüblichen Hardwarekomponenten durchgeführt. Wesentlich für das Funktionieren des Verfahrens ist das Emulieren der beiden unabhängigen internen logischen Kanäle ILK1 und ILK2. Ein Implementierung eines derartigen Datenverarbeitungsprogramms ist erfolgreich mit Hilfe der Programmiersprache C durchgeführt worden; als Betriebssystem für den Bildaufbereitungsrechner BAR ist beispielsweise WINDOWS NT geeignet.

Es sei an dieser Stelle betont, daß die Darstellung nach Fig. 1 lediglich schematischen Charakter hat. Wenn das Verfahren mittels eines Datenverarbeitungsprogramms gesteuert wird, so wird etwa der Schalter SCH nicht als Hardware, sondern über entsprechende Softwareroutinen realisiert sein. Auch die Vergleicherstufen VGL1 und VGL2 sind vorzugsweise als Softwaremodule ausgeführt. Um den Vergleich in den Vergleicherstufen durchführen zu können, kann es ferner erforderlich sein, den Inhalt des Bildwiederholspeichers BWS zunächst in Zwischenspeicher zu übertragen, die beispielsweise im Hauptspeicher definiert sind. Ähnliches gilt auch für die Bildspeicher BS1 und BS2: Hier können separate Speicherplatinen oder aber unterschiedlich adressierte Bereiche im Hauptspeicher vorgesehen sein. Daraus wird deutlich, daß die logische Zweikanaligkeit nicht nur für den Bildaufbereitungsrechner BAR gilt, sondern auch die Bildspeicher und die Vergleicherstufen umfaßt.

Im folgenden wird ein konkretes Anwendungsbeispiel der Erfindung näher erläutert. In Stellwerken beobachten Fahrdienstleiter auf Monitoren den Zustand des Eisenbahnbetriebs. Auf dem Monitor ist üblicherweise ein Gleisbild dargestellt, welches den Fahrdienstleiter über den Zustand aller im dargestellten Ausschnitt enthaltenen Weichen und Signale informiert. Ferner kann der Fahrdienstleiter den Lauf der Züge auf dem Gleisbild verfolgen. Um dies zu ermöglichen, übertragen in modernen Bahnhofsanlagen alle Feldelemente (Weichen, Signale, Gleisfreimelder etc.) Informationen über ihren Zustand einer zentralen Melderechnereinheit. In dieser Melderechnereinheit, die gewöhnlich ein 2-aus-3-Rechnersystem ist, wird aus den zugeführten Informationen ein logisches Abbild des Eisenbahnbetriebszustandes in Echtzeit erzeugt. Dieses logische Abbild umfaßt nicht nur die Zustände aller Feldelemente, sondern auch komplexe Betriebszustände wie beispielsweise die Freimeldung von Fahrstraßen.

Die Melderechnereinheit übermittelt parallel über zwei unterschiedlich codierte logische Kanäle das logische Abbild des Betriebszustandes an ein Anzeigerechnersystem, welches die Aufgabe hat, das logische Abbild als Gleisbild auf einem Monitor anzuzeigen. Dies ist in Fig. 3 dargestellt. Das Anzeigerechnersystem ist hier ein Bildaufbereitungssystem BAS, auf dem das erfindungsgemäße Verfahren zur sicheren Darstellung von Bildern durchgeführt wird. Über die beiden logischen Meldekanäle MK1 und MK2 führt die Melderechnereinheit dem Bildaufbereitungsrechner BAR erste und zweite Informationen i1 bzw. i2 zu, die inhaltsgleich, aber unterschiedlich codiert sind. In der Regel werden die Informationen i1 und i2 von zwei unterschiedlichen Rechnern der Melderechnereinheit zur Verfügung gestellt.

Bei dem in Fig. 3 gezeigten Ausführungsbeispiel sind an einen Bildaufbereitungsrechner BAR zwei Monitore M1 und M2 angeschlossen, die beispielsweise verschiedene Ausschnitte aus einem großen Gleisbild zeigen. Jeder der beiden Monitore ist mit eigenen Bildwiederholspeichern BWS1 und BWS2 ausgestattet. Dies erfordert die doppelte Anzahl von Bildspeichern BS11, BS12, BS21, BS22. Im dargestellten Ausführungsbeispiel sind für jeden Bildwiederholspeicher zwei eigene Vergleicherstufen VGL11, VGL12, VGL21, VGL22 vorgesehen. Femer erlauben zwei Schalter SCH1 und SCH2, im Rahmen der Nichtübereinstimmungsprüfung den ersten internen logischen Kanal ILK1 in beliebiger Weise zu den Bildwiederholspeichern BWS1 und BWS2 sowie zu den Bildspeichern BS11 und BS21 durchzuschalten.

Die Ausgänge der Vergleicherstufen VGL11, VGL12, VGL21, VGL22 sind bei diesem Ausführungsbeispiel zu einem gemeinsamen Ausgang P zusammengefaßt. An diesen gemeinsamen Ausgang P kann ein externer Rechner (nicht dargestellt) angeschlossen werden, der die Auswertung der von den Vergleicherstufen ermittelten Ergebnisse übernimmt. Um die Sicherheit zu erhöhen, kann es sinnvoll sein, diesen externen Rechner als einen 2-aus-3-Rechner auszuführen.

Nicht dargestellt in den Figuren sind zusätzliche Bedienerschnittstellen wie Tastaturen, Mauszeiger oder Digitalisiertabletts. Diese stehen mit dem Bildaufbereitungsrechner BAR in Verbindung und gestatten es etwa bei der Anzeige von Gleisplänen dem Fahrdienstleiter, das vom Bildaufbereitungsrechner BAR aufbereitete Bild zu verändern und Bedienhandlungen wie z. B. das Stellen einer Weiche oder einer Fahrstraße vorzunehmen. Wie bereits erwähnt, kann die Durchführung der (Nicht)Übereinstimmungsprüfungen von der Art der Bedienhandlungen abhängig gemacht werden. So wird bei Bedienhandlungen, die vom Fahrdienstleiter eine kontrollpflichtige Freigabe erfordern, eine Überprüfung der Sicherheit der Bildschirmdarstellung mittels einer (Nicht-)Übereinstimmungsprüfung sinnvoll sein.

## Patentansprüche

1. Verfahren zur sicheren Darstellung eines Bildes auf einem Monitor mit folgenden Merkmalen:
a) einem Bildaufbereitungsrechner (BAR) werden Informationen (i) zugeführt,
b) der Bildaufbereitungsrechner (BAR) erzeugt in einem ersten internen logischen Kanal (ILK1) aus den Informationen (i) ein erstes Bild (B1),
c) das erste Bild (B1) wird in einem ersten Bildspeicher (BS1) sowie in einem Bildwiederholspeicher (BWS) abgelegt und unter Verwendung des Inhalts des Bildwiederholspeichers (BWS) auf dem Monitor (M) angezeigt,
d) der Bildaufbereitungsrechner (BAR) erzeugt in einem zweiten internen logischen Kanal (ILK2) aus den Informationen (i) ein zweites Bild (B2),
e) das zweite Bild (B2) wird in einem zweiten Bildspeicher (BS2) abgelegt,
f) der Inhalt des Bildwiederholspeichers (BWS) wird wenigstens teilweise mit dem Inhalt des ersten Bildspeichers (BS1) und unabhängig davon mit dem Inhalt des zweiten Bildspeichers (BS2) verglichen.

2. Verfahren nach Anspruch 1, bei dem der Inhalt des Bildwiederholspeichers (BWS) Bildpunkt für Bildpunkt mit dem Inhalt des ersten Bildspeichers (BS1) und unabhängig davon mit dem Inhalt des zweiten Bildspeichers (BS2) verglichen wird.

3. Verfahren nach einem der vorhergehenden Ansprüche, bei dem, bevor der Inhalt des Bildwiederholspeichers (BWS) mit dem Inhalt des ersten Bildspeichers (BS1) und unabhängig davon mit dem Inhalt des zweiten Bildspeichers (BS2) verglichen wird, in einem der beiden internen logischen Kanäle (ILK1 in Fig. 2) gezielt wenigstens ein Bildpunkt verändert wird.

4. Verfahren nach einem der vorhergehenden Ansprüche, bei dem der Inhalt des Bildwiederholspeichers (BWS) mit dem Inhalt des ersten Bildspeichers (BS1) und unabhängig davon mit dem Inhalt des zweiten Bildspeichers (BS2) verglichen wird, wenn eine Bedienhandlung durch einen Benutzer erfolgt ist.

5. Verfahren nach einem der vorhergehenden Ansprüche, bei dem der Inhalt des Bildwiederholspeichers (BWS) mit dem Inhalt des ersten Bildspeichers (BS1) und unabhängig davon mit dem Inhalt des zweiten Bildspeichers (BS2) in festgelegten Zeitabständen verglichen wird.

6. Verfahren nach einem der vorhergehenden Ansprüche, bei dem den beiden internen logischen Kanälen (ILK1, ILK2) des Bildaufbereitungsrechners (BAR) die Informationen (i) in unterschiedlich codierter Form (i₁, i₂) zugeführt werden.

7. Datenträger, auf dem ein Datenverarbeitungsprogramm zur Ausführung aller Verfahrensschritte des Verfahrens nach einem der vorhergehenden Ansprüche gespeichert ist.

## Claims

1. Method for the reliable display of a picture on a monitor having the following features:
a) information items (i) are supplied to a image-processing computer (BAR),
b) in a first internal logic channel (ILK1), the image-processing computer (BAR) generates a first picture (B1) from the information items (i),
c) the first picture (B1) is stored in a first frame buffer (BS1) and also in a frame repetition buffer (BWS) and displayed on the monitor (M) using the content of the frame repetition buffer (BWS),
d) the image-processing computer (BAR) generates, in a second internal logic channel (ILK2), a second picture (B2) from the information items (i),
e) the second picture (B2) is stored in a second frame buffer (BS2),
f) the content of the frame repetition buffer (BWS) compared at least partly with the content of the first frame buffer (BS1) and, independently thereof, with the content of the second frame buffer (BS2).

2. Method according to Claim 1, in which the content of the frame repetition buffer (BWS) is compared pixel for pixel with the content of the first frame buffer (BS1) and, independently thereof, with the content of the second frame buffer (BS2).

3. Method according to either of the preceding claims, in which, before the content of the frame repetition buffer (BWS) is compared with the content of the first frame buffer (BS1) and, independently thereof, with the content of the second frame buffer (BS2), at least one pixel is deliberately altered in one of the two internal logic channels (ILK1 in Figure 2).

4. Method according to any of the preceding claims, in which the content of the frame repetition buffer (BWS) is compared with the content of the first frame buffer (BS1) and, independently thereof, with the content of the second frame buffer (BS2) if an operating action is performed by a user.

5. Method according to any of the preceding claims, in which the content of the frame repetition buffer (BWS) is compared with the content of the first frame buffer (BS1) and, independently thereof, with the content of the second frame buffer (BS2) in fixed time intervals.

6. Method according to any of the preceding claims, in which the information items (i) are supplied in differently coded form (i₁, i₂) to the two internal logic channels (ILK1, ILK2) of the image-processing computer (BAR).

7. Data medium on which the data-processing program for performing all the method steps of the method according to any of the preceding claims is stored.

## Revendications

1. Procédé pour la représentation sûre d'une image sur un moniteur avec les caractéristiques suivantes :
a) des informations (i) sont amenées à un ordinateur de conversion vidéo (BAR),
b) l'ordinateur de conversion vidéo (BAR) génère dans un premier canal logique interne (ILK1) une première image (B1) à partir des informations (i),
c) la première image (B1) est déposée dans une première mémoire d'images (BS1) et dans une mémoire de rafraîchissement d'image (BWS) et est affichée sur le moniteur (M) en utilisant le contenu de la mémoire de rafraîchissement d'image (BWS),
d) l'ordinateur de conversion vidéo (BAR) génère dans un deuxième canal logique interne (ILK2) une deuxième image (B2) à partir des informations (i),
e) la deuxième image (B2) est déposée dans une deuxième mémoire d'images (BS2),
f) le contenu de la mémoire de rafraîchissement d'image (BWS) est comparé au moins partiellement avec le contenu de la première mémoire d'images (BS1) et indépendamment de cela avec le contenu de la deuxième mémoire d'images (BS2).

2. Procédé selon la revendication 1, avec lequel le contenu de la mémoire de rafraîchissement d'image (BWS) est comparé pixel après pixel avec le contenu de la première mémoire d'images (BS1) et indépendamment de cela avec le contenu de la deuxième mémoire d'images (BS2).

3. Procédé selon l'une quelconque des revendications précédentes, avec lequel, avant que le contenu de la mémoire de rafraîchissement d'image (BWS) soit comparé avec le contenu de la première mémoire d'images (BS1) et indépendamment de cela avec le contenu de la deuxième mémoire d'images (BS2), au moins un pixel est modifié de façon adéquate dans l'un des deux canaux logiques internes (ILK1 sur la figure 2).

4. Procédé selon l'une quelconque des revendications précédentes, avec lequel le contenu de la mémoire de rafraîchissement d'image (BWS) est comparé avec le contenu de la première mémoire d'images (BS1) et indépendamment de cela avec le contenu de la deuxième mémoire d'images (BS2), lorsqu'une opération de commande est effectuée par un utilisateur.

5. Procédé selon l'une quelconque des revendications précédentes, avec lequel le contenu de la mémoire de rafraîchissement d'image (BWS) est comparé avec le contenu de la première mémoire d'images (BS1) et indépendamment de cela avec le contenu de la deuxième mémoire d'images (BS2) à des intervalles de temps définis.

6. Procédé selon l'une quelconque des revendications précédentes, avec lequel les informations (i) sont amenées dans une forme différemment codée (i₁, i₂) aux deux canaux logiques internes (ILK1, ILK2) de l'ordinateur de conversion vidéo (BAR).

7. Support de données, sur lequel est mémorisé un programme de traitement de donnés pour l'exécution de toutes les étapes du procédé selon l'une quelconque des revendications précédentes.
